# EUROPÄISCHE PATENTSCHRIFT

(11) **EP 2 769 192 B1**
(45) Veröffentlichungstag und Bekanntmachung des Hinweises auf die Patenterteilung: **22.03.2017**
(21) Anmeldenummer: 12791125.3
(22) Anmeldetag: 07.11.2012
(51) Int. Cl.: G01L 3/10

(54) **MAGNETOELASTISCHER TORSIONS- ODER DREHMOMENTSENSOR UND VERFAHREN ZUM ERMITTELN EINER TORSION ODER EINES DREHMOMENTES MIT HILFE EINES DERARTIGEN SENSORS.**
MAGNETO-ELASTIC TORSION OR TORQUE SENSOR AND METHOD FOR DETERMINING TORSION OR TORQUE USING SUCH A SENSOR
CAPTEUR MAGNÉTOÉLASTIQUE DE TORSION OU DE COUPLE ET PROCÉDÉ DE DÉTERMINATION DE TORSION OU DE COUPLE À L'AIDE D'UN TEL CAPTEUR

(30) Priorität: 13.01.2012 EP 12151083
(43) Veröffentlichungstag der Anmeldung: 27.08.2014
(73) Patentinhaber: Siemens Aktiengesellschaft, 80333 München (DE)
(72) Erfinder: BRUMMEL, Hans-Gerd, 13465 Berlin (DE); LINNERT, Uwe, 90766 Fürth (DE); MAIER, Carl, Udo, 70499 Stuttgart (DE); OSTERMAIER, Jochen, 91056 Erlangen (DE); PFEIFER, Uwe, 12557 Berlin (DE)
(86) Internationale Anmeldenummer: PCT/EP2012/071978
(87) Internationale Veröffentlichungsnummer: WO 2013/104447

(56) Entgegenhaltungen:
- DE-A1-102006 017 727
- DE-U1- 9 304 629
- US-A- 5 144 846

## Beschreibung

Die vorliegende Erfindung betrifft einen magnetoelastischen Torsions- oder Drehmomentsensor. Daneben betrifft die Erfindung ein Verfahren zum Ermitteln einer Torsion oder eines Drehmoments mit Hilfe eines magnetoelastischen Kraftsensors.

Die Permeabilität ferromagnetischer Materialien wird durch mechanische Spannungen beeinflusst. Dieser physikalische Effekt, der als magnetoelastischer Effekt bekannt ist, kann zum Messen von Kräften, die auf einen Gegenstand einwirken und Spannungen in diesem Gegenstand herbeiführen, herangezogen werden. Dazu wird der Gegenstand mit einer ferromagnetischen Schicht versehen, sofern der Gegenstand nicht selbst aus einem ferromagnetischen Material besteht oder eine ferromagnetische Schicht beinhaltet. Magnetoelastische Kraftsensoren können dann mittels des magnetoelastischen Effekts die durch eine einwirkende Kraft hervorgerufenen Spannungen messen, wobei aus dem Messergebnis die die Spannungen verursachende Kraft ermittelt werden kann. Auf dem magnetoelastischen Effekt basierende magnetoelastische Kraftsensoren können u.a. zur Messung von Drehmomenten in einem rotierenden Objekt herangezogen werden, da ein Drehmoment Spannungen in dem rotierenden Objekt erzeugt.

Es sind eine Reihe verschiedener Sensoren bekannt, die den magnetoelastischen Effekt verwenden, um kontaktlos Drehmomente bspw. von Wellen zu erfassen. Die magnetoelastischen Sensoren zeichnen sich durch hohe Genauigkeit aus, wobei eine Nachkalibrierung ebenso wenig erforderlich ist, wie das Anfahren von Referenzmarken.

Ein magnetoelastischer Drehmomentsensor, der zum Messen des Drehmoments von Antriebswellen zum Einsatz kommen, ist beispielsweise aus DE 10 2009 008 074 A1 bekannt. In diesem Dokument ist eine Messanordnung zum Erfassen des Drehmoments einer Welle beschrieben, die einen mit einem vorbestimmten Spaltabstand von der Oberfläche der Welle positionierten Drehmomentsensor umfasst.

Zur Messung von Drehmomenten an Kraft übertragenden Wellen von Maschinen wird in einem geringen Abstand von der Oberfläche der Welle kontaktlos eine elektromagnetische Spule angeordnet, die auf die Veränderung der Permeabilität in einer ferromagnetischen Schicht auf der Welle oder einer an sich ferromagnetischen Welle mit einer Signaländerung reagiert. Hierzu muss die Welle Torsionsspannungen ausgesetzt sein, d.h. der magnetoelastische Drehmomentsensor muss entlang der Welle zwischen einem antreibenden Drehmoment und dem ihm entgegengesetzt wirkenden Reaktionsdrehmoment angeordnet sein. Die aus dem ferromagnetischen Material gebildete Welle ist dadurch Teil der Messvorrichtung.

Wenn Positionsveränderungen der Welle während der Messung erfolgen, wird das Messergebnis, das sehr empfindlich auf den Abstand zwischen dem Sensor und der Welle reagiert, von den Positionsänderungen beeinflusst. Bereits Bewegungen um wenige zehntel Millimeter senkrecht zur Drehachse der Welle beeinflussen das Messergebnis des Drehmomentsensors erheblich. Insbesondere bei technischen Anwendungen, in denen großdimensionierte Wellen zur Kraftübertragung zum Einsatz kommen, können solche Positionsveränderungen der Welle mit keinem wirtschaftlich vertretbaren technischem Aufwand beseitigt werden.
In DE 10 2009 008 074 A1 ist daher vorgeschlagen worden, den Drehmomentsensor mittels eines die Welle umgreifenden Ringes an dieser zu positionieren. Der Ring ist zudem mit einem Gehäuseabschnitt verbunden, um ihn gegen ein Mitdrehen mit der Welle zu sichern. Er ist dabei um eine Schwenkachse verschwenkbar und in Radialrichtung der Welle verschiebbar an dem Gehäuseabschnitt befestigt, so dass er Bewegungen der Welle mitmachen kann. Die Lagerung des Rings an der Welle erfolgt dabei durch eine Lagerbuchse, durch Gleitschalen oder durch Kugellager.

In DE 93 04 629 U1 wird die Problematik der Abstandsabhängigkeit dadurch gelöst, dass an jedem Pol eines Joches mehrere nebeneinander angeordnete Magnetfeldsensoren Verwendung finden, nämlich ein Kernfeldsensor unterhalb des jeweiligen Pols des Jochs und in Bezug auf den jeweiligen Pol versetzte Streufeldsensoren. Das Verhältnis aus Streuflussdichte und Kernflussdichte ist nahezu unabhängig von der Permeabilität der Schicht auf der Welle, deren Drehmoment gemessen werden soll, so dass das Verhältnis nur von der Luftspaltbreite abhängt.

In US 5,144,846 wird die mechanische Spannung einer Welle mit Hilfe der Sendespule gemessen. Dazu wird die Amplitude des Sendespulenstroms oder der Sendespulenspannung auf einen konstanten Wert geregelt und die dazu nötige Sendespulenspannung bzw. der dazu nötige Sendespulenstrom gemessen.

Im Lichte des beschriebenen Standes der Technik ist es eine erste Aufgabe der vorliegenden Erfindung, einen vorteilhaften magnetoelastischen Torsions- oder Drehmomentsensor zur Verfügung zu stellen. Gemäß einem weiteren Aspekt der Erfindung ist es eine dritte Aufgabe, ein Verfahren zum Ermitteln einer Torsion oder eines Drehmoments mit Hilfe eines magnetoelastischen Kraftsensors zur Verfügung zu stellen.

Die erste Aufgabe wird durch einen magnetoelastischen Torsions- oder Drehmomentsensor nach Anspruch 1 gelöst, die zweite Aufgabe durch ein Verfahren zum Ermitteln einer Torsion oder eines Drehmoments nach Anspruch 6. Die abhängigen Ansprüche enthalten vorteilhafte Ausgestaltungen der Erfindung.

Im erfindungsgemäßen Torsions- oder Drehmomentsensor ermöglicht das Erfassen einer die Induktivität der Sendespule wiedergebenden oder mit dieser eindeutig verknüpften elektrischen Größe mit Hilfe der Erfassungseinrichtung das Ermitteln des Abstandes der Sendespule - und damit des Sensorkopfes - von dem Messobjekt, ohne dass ein zusätzlicher Abstandssensor vorhanden zu sein braucht. Mit anderen Worten, die erfindungsgemäße Ausgestaltung des magnetoelastischen Torsions- oder Drehmomentsensors ermöglicht es, den magnetoelastischen Kraftsensor selbst auch als Abstandssensor zu verwenden. Durch die Einheit des Kraftsensors mit dem Abstandssensor lassen sich Fehlerquellen vermeiden, die bei der Installation eines zusätzlichen Abstandssensors auftreten können, etwa Winkelfehler, welche durch eine ungleiche Justierung der beiden Sensoren hervorgerufen werden können.

Da der magnetoelastische Kraftsensor auch eine Einrichtung zum Bestimmen des Abstandes dieses Sensorkopfes von dem Messobjekt aus der elektrischen Größe umfasst, kann er auch als reiner Abstandssensor Verwendung finden. Die Einrichtung zum Bestimmen des Abstandes des Sensorkopfes von dem Messobjekt kann hierbei insbesondere einen Speicher mit einer gespeicherten Beziehung umfassen, in der Werte der die Induktivität der Sendespule wiedergebenden oder mit dieser eindeutig verknüpften elektrischen Größe der Sendespule mit Werten für den Abstand der Sendespule oder des Sensorkopfes von dem Messobjekt in Beziehung gesetzt sind. Hierzu kann der Speicher beispielsweise eine die Beziehung wiedergebende Nachschlagetabelle oder einen funktionalen Zusammenhang in Form einer Gleichung enthalten. Weiterhin umfasst die Einrichtung zur Bestimmung des Abstandes des Sensorkopfes von dem Messobjekt in dieser Ausgestaltung eine Zuordnungseinheit, die sowohl mit der Erfassungseinrichtung als auch mit dem Speicher unmittelbar oder mittelbar in Verbindung steht. Die Zuordnungseinheit ordnet der erfassten elektrischen Größe anhand der gespeicherten Beziehung einen Abstand der Sendespule oder des Sensorkopfes von dem Messobjekt zu und erzeugt eine den zugeordneten Abstand repräsentierende Abstandsgröße.

In einer vorteilhaften Weiterbildung des erfindungsgemäßen magnetoelastischen Torsions- oder Drehmomentsensors umfasst dieser außerdem eine Korrektureinheit, die unmittelbar oder mittelbar mit dem wenigstens einen Magnetfeldsensor und zum Empfangen der Abstandsgröße mit der Zuordnungseinheit verbunden ist. Anhand der empfangenen Abstandsgröße korrigiert die Korrektureinheit. Die Messergebnisse des wenigstens einen Magnetfeldsensors beim Messen eines durch das Magnetfeld der Sendespule in dem Messobjekt verursachten magnetischen Flusses. Diese Ausgestaltung ermöglicht eine Kompensation von Abstandsschwankungen des Sensorkopfes bei der Kraftmessung, ohne dass hierfür das Signal eines zusätzlichen Abstandssensors benötigt wird.

Die eingangs beschriebene Problematik bei der Drehmomentmessung an Wellen, bei denen eine Verlagerung senkrecht zur Rotationsachse erfolgt, kann mit dem erfindungsgemäßen Drehmomentsensor dadurch überwunden werden, dass eine Kompensation der abstandsabhängigen Schwankungen im Messsignal des Drehmomentsensors erfolgt. Es ist daher weder ein Beseitigen von Positionsveränderungen einer rotierenden Welle, noch ein Mitbewegen des Drehmomentsensors mit den Wellenbewegungen nötig. Dadurch wird der Aufbau einer Anordnung zur Drehmomentmessung an einer Welle erheblich vereinfacht.

Gemäß einem weiteren Aspekt der vorliegenden Erfindung wird ein Verfahren zum Ermitteln einer Torsion oder eines Drehmoments in einem Messsignal eines magnetoelastischen Kraftsensors zur Verfügung gestellt. Dabei repräsentiert das Messsignal den im Messobjekt verursachten magnetischen Fluss. Im Rahmen des erfindungsgemäßen Verfahrens wird eine die Induktivität der Sendespule wiedergebende oder mit dieser eindeutig verknüpfte elektrische Größe der Sendespule erfasst. Das Erfassen kann dabei beispielsweise analog oder digital erfolgen. Aus der erfassten elektrischen Größe wird dann der Abstand der Sendespule oder des Sensorkopfes, der die Sendespule trägt, von dem Messobjekt ermittelt. Anhand des ermittelten Abstandes wird dann die Abstandsabhängigkeit im Messsignal kompensiert.

Mit Hilfe des erfindungsgemäßen Verfahrens kann auch bei einem schwankenden Abstand zwischen dem Sensorkopf und dem Messobjekt eine zuverlässige Kraftmessung durchgeführt werden, ohne dass hierzu ein zusätzlicher Abstandssensor nötig wäre. Ein solcher zusätzlicher Abstandssensor würde zudem das genaue Justieren des Kraftsensors und des Abstandssensors relativ zueinander erfordern, wobei Justierungsfehler das Messergebnis des Kraftsensors nachteilig beeinflussen würden. Im Rahmen des erfindungsgemäßen Verfahrens, in dem derselbe Messkopf zum Messen der Kraft sowie zum Messen des Abstandes zum Einsatz kommt, können solche Justierungsfehler nicht auftreten. Mit dem erfindungsgemäßen Verfahren lässt sich daher die Robustheit eines magnetoelastischen Kraftsensors bei der Messung erhöhen.

Der Abstand der Sendespule oder des Sensorkopfes von dem Messobjekt kann aus der erfassten elektrischen Größe insbesondere anhand einer vorgegebenen Beziehung zwischen Werten der die Induktivität der Sendespule wiedergebenden oder mit dieser eindeutig verknüpften elektrischen Größe der Sendespule einerseits und Werten für den Abstand der Sendespule oder des Sensorkopfes von dem Messobjekt andererseits ermittelt werden, wobei die vorgegebene Beziehung beispielsweise in Form einer Nachschlagetabelle oder algebraischen Gleichung vorliegen kann.

Die vorgegebene Beziehung zwischen Werten der die Induktivität der Sendespule wiedergebenden oder mit dieser eindeutig verknüpften elektrischen Größe der Sendespule und den Werten für den Abstand der Sendespule oder des Sensorkopfes von dem Messobjekt kann beispielsweise durch eine Kalibrierungsmessung ermittelt werden. Durch das Vornehmen einer Kalibrierungsmessung können in der vorgegebenen Beziehung auch lokale Besonderheiten am Ort der Messung in der vorgegebenen Beziehung Berücksichtigung finden.

Die mit dem erfindungsgemäßen Verfahren verbundenen Vorteile sind mit Bezug auf den erfindungsgemäßen magnetoelastischen Drehmomentsensor erläutert worden. Auf die diesbezüglichen Ausführungen wird daher verwiesen.

Weitere Merkmale, Eigenschaften und Vorteile der vorliegenden Erfindung, die einzeln oder in Kombination miteinander vorteilhaft sein können, ergeben sich aus der nachfolgenden Beschreibung von Ausführungsbeispielen unter Bezugnahme auf die beiliegenden.Figuren.
Figur 1 zeigt ein Beispiel für einen magnetoelastischen Kraftsensor mit einem U-förmigen Sensorkopf.
Figur 2 zeigt ein Ausführungsbeispiel für einen erfindungsgemäßen Torsions- oder Drehmomentsensor in einer Seitenansicht.
Figur 3 zeigt den Torsions- oder Drehmomentsensor aus Figur 2 in einer Draufsicht.

Ein magnetoelastischer Sensor beruht auf dem inversen magnetostriktiven Effekt, also dem Effekt, dass ferromagnetische Materialien eine Änderung in der magnetischen Permeabilität erfahren, wenn mechanische Spannungen auftreten. Da mechanische Spannungen durch Zug- und Druckkräfte sowie durch Torsion induziert werden, kann der inverse magnetostriktive Effekt zur Kraft- und zur Drehmomentmessung herangezogen werden und ist daher vielseitig einsetzbar.

Sensorköpfe zum Messen des inversen magnetostriktiven Effekts umfassen eine Sende- oder Erregerspule, mit der in der ferromagnetischen Schicht ein wechselndes Magnetfeld induziert wird. Dabei wird in der Schicht ein Antwortsignal generiert, dessen magnetische Flussdichte von der Permeabilität der Schicht abhängt. Diese wird wiederum von den in der Schicht herrschenden mechanischen Spannungen bestimmt. Die magnetische Flussdichte des Antwortsignals wird mit einem Magnetfeldsensor gemessen, der bspw. eine Empfangsspule sein kann. Die magnetische Flussdichte des Antwortsignals bestimmt dann die Stromstärke des in der Empfangsspule auf Grund der sie durchsetzenden magnetischen Flussdichte induzierten Stroms. Aus der Stromstärke können dann die mechanischen Spannungen in der ferromagnetischen Schicht errechnet werden, aus denen wiederum die die Spannungen induzierende Kraft ermittelt werden kann. Außer Empfangsspulen kommen als Magnetfeldsensoren bspw. auch auf dem Hall-Effekt beruhende Magnetfeldsensoren, auf dem GMR-Effekt (englisch: Giant magneto resistance, zu Deutsch: Riesenmagnetowiederstand) beruhende Magnetfeldsensoren oder auf dem AMR-Effekt (Anisotoper magnetoresistiver Effekt) beruhende Magnetfeldsensoren in Betracht.

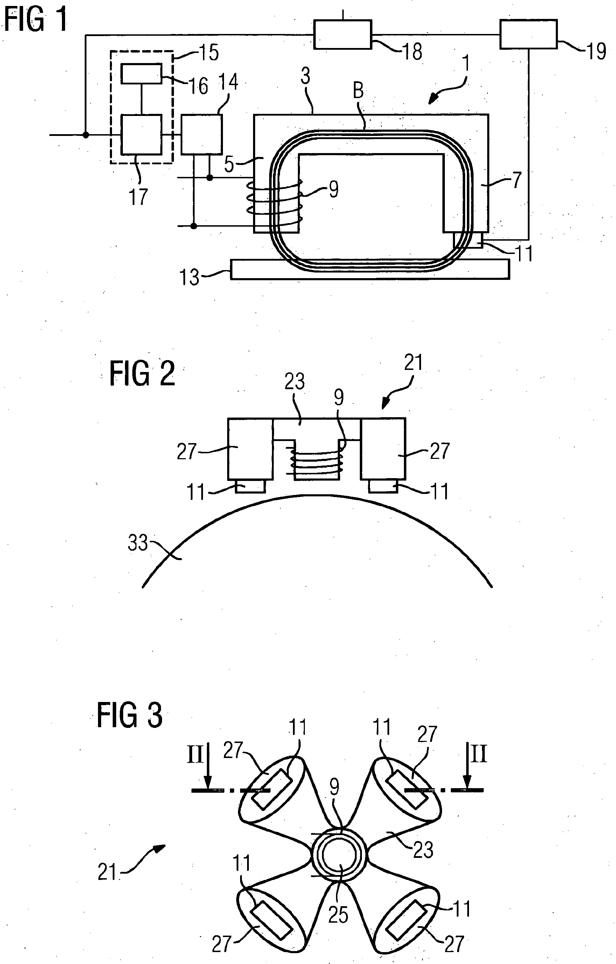

Ein Beispiel für einen Kraftsensor ist in Figur 1 dargestellt. Der Kraftsensor umfasst einen Sensorkopf 1 mit einem U-förmigen Ferritkern 3, welcher zwei parallel zueinander ausgerichtete Schenkel 5 und 7 aufweist. Auf den ersten Schenkel 5 ist eine Sende- oder Erregerspule 9 aufgebracht, mit der ein Magnetfeld generiert werden kann. Auf dem zweiten Schenkel 7 ist ein Magnetfeldsensor 11 angeordnet, der im vorliegenden Beispiel als Hall-Sensor ausgebildet ist, aber auch ein anderer der oben genannten Magnetfeldsensoren sein kann.

Für den Messvorgang des Sensors wird mittels der Sendespule 9 ein Magnetfeld erzeugt, dessen magnetische Flussdichte in Figur 1 durch die Feldlinien B dargestellt ist. Die Feldlinien verlaufen durch eine ferromagnetische Schicht 13 eines Messobjekts und werden über den Ferritkern 3 geschlossen. Die Schicht 13 kann auf dem zu messenden Objekt aufgebracht oder in dieses eingebracht sein. Alternativ kann das Messobjekt selbst aber auch aus einem ferromagnetischen Material bestehen.

Mittels des Magnetfeldsensors 11 kann die magnetische Flussdichte des Magnetfeldes gemessen werden. Der Messwert hängt dabei von der magnetischen Permeabilität in der ferromagnetischen Schicht 13 ab, die wiederum von den in der ferromagnetischen Schicht herrschenden Spannungen beeinflusst wird. Aus dem mit dem Magnetfeldsensor 11 gewonnenen Messergebnis für die magnetische Flussdichte können daher die in der ferromagnetischen Schicht 13 herrschenden Spannungen berechnet werden. Da die ferromagnetische Schicht 13 entweder das Objekt selber darstellt oder mit dem Objekt verbunden ist, repräsentieren die in der ferromagnetischen Schicht 13 herrschenden Spannungen auch die im Messobjekt herrschenden Spannungen.

Der mit dem Magnetfeldsensor 11 gemessene Messwert hängt aber auch vom Abstand des Sensorkopfes von dem Messobjekt bzw. von der ferromagnetischen Schicht, wenn das Messobjekt selbst nicht ferromagnetisch ist, ab. Aus diesem Grund umfasst der magnetoelastische Kraftsensor eine Einheit 14 zum Erfassen der Amplitude der Sendespulenspannung. Die Einheit 14 kann analog oder digital ausgebildet sein, wobei die digitale oder analoge Ausbildung insbesondere von der späteren Art der Verarbeitung des erfassten Signals abhängen kann.

Statt wie im vorliegenden Beispiel der Amplitude der Sendespulenspannung kann im Rahmen der Erfindung eine andere elektrische Größe erfasst werden, die geeignet ist, die Induktivität der Erregerspule zu repräsentieren. Aus der erfassten elektrischen Größe, im vorliegenden Beispiel also aus der erfassten Amplitude der Sendespulenspannung, kann der Abstand der Sendespule 9 von der ferromagnetischen Schicht 13, also vom Messobjekt, ermittelt werden. Verändert sich nämlich der Luftspalt zwischen dem Messobjekt 13 und dem Sensorkopf 1, so ändert sich die Induktivität der Sendespule 9 und dies ohne Einfluss der mechanischen Spannungen im Messobjekt. Daher kann eine die Induktivität der Sendespule 9 repräsentierende elektrische Größe wie etwa die Amplitude der Sendespulenspannung dazu Verwendung finden, den Abstand der Sendespule 9 vom Messobjekt zu ermitteln. Aus der räumlichen Anordnung der Sendespule 9 am Sensorkopf lässt sich daher der Abstand jedes beliebigen Punktes des Sensorkopfes vom Messobjekt ermitteln, insbesondere auch der Abstand des Magnetfeldsensors 11 vom Messobjekt 13.

Zwar kann die mittels der Erfassungseinrichtung 14 erfasste elektrische Größe vom magnetoelastischen Kraftsensor ausgegeben und extern verarbeitet werden, um den Abstand des Sensorkopfes 1 vom Messobjekt 13 zu ermitteln, im vorliegenden Beispiel geschieht dies jedoch im magnetoelastischen Kraftsensor selbst. Hierzu weist der Kraftsensor eine Einrichtung 15 zum Bestimmen des Abstandes des Sensorkopfes 1 vom Messobjekt 13 aus der erfassten elektrischen Größe auf. Diese Einrichtung 15 umfasst im vorliegenden Beispiel einen Speicher 16 und eine mit der Erfassungseinrichtung 14 sowie mit dem Speicher 16 in Verbindung stehende Zuordnungseinheit 17. In dem Speicher 16 ist eine Beziehung gespeichert, in der Werte der die Induktivität der Sendespule 9 wiedergebenden oder mit dieser eindeutig verknüpften elektrischen Größe (im vorliegenden Beispiel der Amplitude der Sendespulenspannung) mit Werten für den Abstand der Sendespule 9 oder des Sensorkopfes 1 von dem Messobjekt 13 in Beziehung gesetzt sind. Im vorliegenden Beispiel ist hierfür im Speicher 16 eine Nachschlagetabelle gespeichert, welche eine eindeutige Zuordnung von Werten für die Amplitude der Sendespulenspannung (oder einer anderen geeigneten elektrischen Größe) zu Werten des Abstandes zwischen dem Sensorkopf 1 und dem Messobjekt 13 enthält. Die Tabelle kann beispielsweise durch eine Kalibrierung der Amplitude der Sendespulenspannung auf den Abstand des Sensorkopfes 1 von dem Messobjekt 13 erstellt werden. Dies kann erfolgen, indem für eine Anzahl von Abständen des Sensorkopfes vom Messobjekt 13 die jeweiligen Werte der Amplitude der Sendespulenspannung erfasst werden und zusammen mit dem jeweiligen Abstand gespeichert werden. Diese Kalibrierung wird idealer Weise vorgenommen, wenn keine Spannungen im Messobjekt 13 vorliegen.

Die Zuordnungseinheit 17 empfängt von der Erfassungseinrichtung 14 die erfasste Amplitude der Sendespulenspannung (oder, wenn eine andere die Induktivität der Sendespule 9 repräsentierende elektrische Größe gewählt ist, den erfassten Wert dieser Größe) und ermittelt den Abstand des Sensorkopfes 1 von dem Messobjekt 13, in dem sie anhand der in Speicher 16 gespeicherten Nachschlagetabelle dem erfassten Amplitudenwert einen Abstand zuordnet. Der zugeordnete Abstand wird dann von der Zuordnungseinheit 17 in Form einer geeigneten, den Abstand repräsentierenden Abstandgröße ausgegeben. Diese Größe kann über einen Ausgang nach extern ausgegeben werden, so dass der magnetoelastische Kraftsensor auch als reiner Abstandssensor betrieben werden kann.

Im vorliegenden Beispiel wird die Abstandsgröße auch an eine Korrektureinheit 18 ausgegeben. Diese empfängt neben der Abstandsgröße auch eine Messgröße, die von einer mit dem Magnetfeldsensor 1 verbundenen Auswerteeinheit 19 auf der Basis des Messsignals des Magnetfeldsensors 11 ermittelt wird. Die Korrektureinheit 18 korrigiert dann die Messgröße anhand des Abstandsignals und gibt eine korrigierte Messgröße als Messergebnis des magnetoelastischen Kraftsensors aus. In der korrigierten Messgröße ist dann eine Abstandsabhängigkeit der ursprünglichen Messgröße kompensiert. Der magnetoelastische Kraftsensor ist daher unempfindlich gegen Schwankungen des Abstandes zwischen dem Sensorkopf 1 und dem Messobjekt 13.

Ein Ausführungsbeispiel für einen erfindungsgemäßen Sensorkopf 21 und einen damit aufgebauten magnetoelastischen Torsions- oder Drehmomentsensor ist in den Figuren 2 und 3 dargestellt. Elemente, die denen des zuvor beschriebenen Beispiels entsprechen, sind mit denselben Bezugsziffern wie in Figur 1 gekennzeichnet und werden nicht noch einmal erläutert, um Wiederholungen zu vermeiden. Die Erläuterung des Ausführungsbeispiels beschränkt sich daher auf die Unterschiede zum zuvor beschriebenen Beispiel.

Figur 2 zeigt dabei eine Seitenansicht durch den Sensorkopf 21 entlang der Linie II-II in Figur 3.
Figur 3 zeigt eine Draufsicht auf die dem ferromagnetischen Material zuzuwendende Seite des Sensorkopfes 21.

Der Sensorkopf 21 des Ausführungsbeispiels weist einen Ferritkern 23 mit einem mittleren Schenkel 25 und vier den mittleren Schenkel 25 umgebenden äußeren Schenkeln 27 auf. Auf dem mittleren Schenkel 25 ist die Sendespule 9 angeordnet. Die Magnetfeldsensoren 11 befinden sich auf den äußeren Schenkeln 27. Die Geometrie des Ferritkerns 21 ist im vorliegenden Ausführungsbeispiel so gewählt, dass die Schenkel zwei Schenkelpaare bilden, in denen jeweils zwei Schenkel einander auf entgegengesetzten Seiten des mittleren Schenkels 25 gegenüber liegen. Die beiden Schenkelpaare weisen eine um 90° gegeneinander verdrehte Orientierung auf, so dass eine Punktsymmetrie in der Anordnung der äußeren Schenkel 27 in Bezug auf den mittleren Schenkel 25 vorliegt. Diese Ausgestaltung des Sensorkopfes 21 ermöglicht eine zweidimensionale Erfassung von Kräften, wie dies bspw. zum Messen von Torsionen in einer Welle 33 oder von Drehmomenten einer Welle vorteilhaft ist. Die Welle 33 kann dabei entweder aus einem ferromagnetischen Material bestehen oder mit einem solchen beschichtet sein.

Für das Bestimmen der Torsion an der Welle 33 wird der Sensorkopf mit den Verbindungslinie zwischen einander gegenüberliegenden äußeren Schenkeln 27 eines Schenkelpaares entlang der bei der Torsion auftretenden Hauptkräfte ausgerichtet, die senkrecht zueinander verlaufen. Bei einer Torsion herrschen in einer Richtung eine Zugkraft und in die dazu senkrechte Richtung eine Druckkraft vor. Dies bedeutet, dass die magnetische Permeabilität des ferromagnetischen Materials der Welle 33 in die eine Richtung größer und in die andere Richtung kleiner wird. Mittels der in Figur 2 und Figur 3 dargestellten Geometrie des Sensorkopfes 21 können die Permeabilitäten in die beiden Richtungen getrennt voneinander erfasst werden, so dass sich bspw. durch eine Differenzbildung die Torsion der Welle aus den erfassten Permeabilitäten und den daraus zu errechnenden Zug- bzw. Druckspannungen ermitteln lässt. Da bei einer rotierenden Welle aufgrund des antreibenden Drehmoments und dem ihm entgegengesetzt wirkenden Reaktionsdrehmoment eine Torsion entsteht, deren Größe vom Drehmoment abhängt, kann aus der erfassten Torsion das die Torsion verursachende Drehmoment ermittelt werden.

Der in den Figuren 2 und 3 dargestellte Sensorkopf 21 ist Teil eines magnetoelastische Torsions- oder Drehmomentsensors, der wie der in Figur 1 dargestellte elektromagnetische Kraftsensor des zuvor beschriebenen Beispiels eine Erfassungseinrichtung, eine Einrichtung zum Bestimmen des Abstandes des Sensorkopfes von dem Messobjekt und eine Korrektureinheit aufweist. Die Erfassungseinrichtung, die Einrichtung zum Bestimmen des Abstandes des Sensorkopfes von dem Messobjekt und die Korrektureinheit entsprechen in ihrer Ausgestaltung und Anordnung denjenigen aus Figur 1 und sind deshalb der Übersichtlichkeit halber in den Figuren 2 und 3 nicht dargestellt.

Die vorliegende Erfindung wurde anhand eines exemplarischen Ausführungsbeispiels zu Illustrationszwecken beschrieben. Das Ausführungsbeispiel sollen jedoch die Erfindung nicht einschränken, so dass der Schutzumfang lediglich durch die beigefügten Ansprüche beschränkt ist. Insbesondere sind Abweichungen von dem dargestellten Ausführungsbeispiel möglich.

So kann beispielsweise statt der verwendeten Nachschlagetabelle eine algebraische Gleichung Verwendung finden um die Messwerte für die die Induktivität der Sendespule repräsentierende elektrische Größe den jeweiligen Abstandswerten zuzuordnen.

Die mit Bezug auf das Ausführungsbeispiel beschriebene Symmetrie ist vorteilhaft, aber nicht unbedingt notwendig, da die bei einer nicht symmetrischen Anordnung auftretenden Beeinflussungen der Messsignale grundsätzlich bei der Verarbeitung der Messsignale berücksichtigt werden können. Außerdem ist es auch nicht unbedingt notwendig, dass vier Schenkel vorhanden sind. Jedoch ist das Auswerten der Signale eines mit vier symmetrisch angeordneten Schenkeln ausgestatteten Sensorkopfes einfacher, insbesondere wenn dieser die in den Figuren 2 und 3 gezeigte Geometrie aufweist.

## Patentansprüche

1. Torsions- oder Drehmomentsensor umfassend wenigstens einem magnetoelastischen Kraftsensor mit
- einem Sensorkopf (21), welcher einen Ferritkern (23) mit einem mittleren Schenkel (25) und vier den mittleren Schenkel (25) umgebenden äußeren Schenkeln (27) aufweist, wobei auf dem mittleren Schenkel (25) eine ein Magnetfeld generierende Sendespule (9) und auf den äußeren Schenkeln (27) Magnetfeldsensoren (11) zum Messen eines durch das Magnetfeld der Sendespule (9) in einem Messobjekt (33) verursachten magnetischen Flusses angeordnet sind,
**gekennzeichnet durch**
- eine Erfassungseinrichtung (14) zum Erfassen einer die Induktivität der Sendespule (9) wiedergebenden oder mit dieser eindeutig verknüpften elektrischen Größe, wobei der magnetoelastischer Kraftsensor außerdem eine Einrichtung (15) zum Bestimmen des Abstandes des Sensorkopfes (21) von dem Messobjekt (33) aus der elektrischen Größe umfasst.

2. Torsions- oder Drehmomentsensor nach Anspruch 1,
in dem die Einrichtung (15) zum Bestimmen des Abstandes des Sensorkopfes (21) von dem Messobjekt (33) umfasst:
- einen Speicher (16) mit einer gespeicherten Beziehung, in der Werte der die Induktivität der Sendespule (9) wiedergebenden oder mit dieser eindeutig verknüpften elektrischen Größe der Sendespule (9) mit Werten für den Abstand der Sendespule (9) oder des Sensorkopfes (21) von dem Messobjekt (33) in Beziehung gesetzt sind, und
- eine mit der Erfassungseinrichtung (14) und dem Speicher (16) in Verbindung stehende Zuordnungseinheit (17), welche der erfassten elektrischen Größe anhand der gespeicherten Beziehung einen Abstand der Sendespule (9) oder des Sensorkopfes (21) von dem Messobjekt (33) zuordnet und einen den zugeordneten Abstand repräsentierende Abstandsgröße erzeugt.

3. Torsions- oder Drehmomentsensor nach Anspruch 2,
der außerdem eine mit dem wenigstens einen Magnetfeldsensor (11) und mit der Zuordnungseinheit zum Empfang der Abstandsgröße verbundene Korrektureinheit (18) umfasst, die die Messergebnisse des wenigstens einen Magnetfeldsensors (11) beim Messen eines durch das Magnetfeld der Sendespule (9) in einem Messobjekt (33) verursachten magnetischen Flusses anhand der empfangenen Abstandsgröße korrigiert.

4. Torsions- oder Drehmomentsensor nach einem der vorangehenden Ansprüche,
in dem die die Induktivität der Sendespule (9) wiedergebende oder mit dieser eindeutig verknüpfte elektrische Größe die Amplitude der der Spulenspannung ist.

5. Torsions- oder Drehmomentsensor nach einem der vorangehenden Ansprüche, in dem die Geometrie des Ferritkerns (23) so gewählt ist, dass die Schenkel (27) zwei Schenkelpaare bilden, in denen jeweils zwei Schenkel (27) einander auf entgegengesetzten Seiten des mittleren Schenkels (25) gegenüber liegen und die beiden Schenkelpaare eine um 90° gegeneinander verdrehte Orientierung aufweisen.

6. Verfahren zum Ermitteln einer Torsion oder eines Drehmoments mittels eines magnetoelastischen Kraftsensors, welches ein Verfahren zum Kompensieren einer Abstandsabhängigkeit im Messsignal eines magnetoelastischen Kraftsensors mit einem Ferritkern (23), welcher einen Sensorkopf (21) mit einem mittleren Schenkel (25) und vier den mittleren Schenkel (25) umgebenden äußeren Schenkeln (27) aufweist, wobei auf dem mittleren Schenkel (25) eine ein Magnetfeld generierenden Sendespule (9) und auf den äußeren Schenkeln (27) Magnetfeldsensoren (11) zum Messen eines durch das Magnetfeld der Sendespule (9) in einem Messobjekt (13, 33) verursachten magnetischen Flusses angeordnet sind,
wobei das Messsignal den im Messobjekt (33) verursachten magnetischen Fluss repräsentiert, in dem:
- eine die Induktivität der Sendespule (9) wiedergebende oder mit dieser eindeutig verknüpfte elektrischen Größe der Sendespule (9) erfasst wird,
- aus der erfassten elektrischen Größe der Abstand der Sendespule (9) oder des Sensorkopfes (21) von dem Messobjekt (33) ermittelt wird und
- die Abstandsabhängigkeit im Messsignal anhand des ermittelten Abstands kompensiert wird.

7. Verfahren nach Anspruch 6,
in dem der Abstand der Sendespule (9) oder des Sensorkopfes (21) von dem Messobjekt (33) aus der erfassten elektrischen Größe anhand einer vorgegebenen Beziehung zwischen Werten der die Induktivität der Sendespule (9) wiedergebenden oder mit dieser eindeutig verknüpften elektrischen Größe der Sendespule (9) und Werten für den Abstand der Sendespule (9) oder des Sensorkopfes (21) von dem Messobjekt (33) ermittelt wird.

8. Verfahren nach Anspruch 7,
in dem die vorgegebenen Beziehung zwischen Werten der die Induktivität der Sendespule (9) wiedergebenden oder mit dieser eindeutig verknüpften elektrischen Größe der Sendespule (9) und Werten für den Abstand der Sendespule (9) oder des Sensorkopfes (21) von dem Messobjekt (33) durch eine Kalibrierungsmessung ermittelt wird.

## Claims

1. Torsion or torque sensor comprising at least one magneto-elastic force sensor having
- a sensor head (21), which has a ferrite core (23) with a central limb (25) and four outer limbs (27) surrounding the central limb (25), wherein a transmission coil (9) which generates a magnetic field is arranged on the central limb (25) and magnetic field sensors (11) for measuring a magnetic flux caused by the magnetic field of the transmission coil (9) in a measurement object (33) are arranged on the outer limbs (27),
**characterized by**
- a recording device (14) for recording an electrical variable which represents the inductance of the transmitting coil (9) or is clearly linked thereto, wherein the magneto-elastic force sensor also comprises a device (15) for determining the distance between the sensor head (21) and the measurement object (33) from the electrical variable.

2. Torsion or torque sensor according to Claim 1,
in which the device (15) for determining the distance between the sensor head (21) and the measurement object (33) comprises:
- a memory (16) with a stored relationship in which values of the electrical variable of the transmitting coil (9), which represents the inductance of the transmitting coil (9) or is clearly linked thereto, are related to values for the distance between the transmitting coil (9) or the sensor head (21) and the measurement object (33), and
- an assignment unit (17) which is connected to the recording device (14) and to the memory (16), assigns a distance between the transmitting coil (9) or the sensor head (21) and the measurement object (33) to the recorded electrical variable using the stored relationship and generates a distance variable representing the assigned distance.

3. Torsion or torque sensor according to Claim 2,
which also comprises a correction unit (18) which is connected to the at least one magnetic field sensor (11) and to the assignment unit for receiving the distance variable and corrects the measurement results from the at least one magnetic field sensor (11) when measuring a magnetic flux caused by the magnetic field of the transmitting coil (9) in a measurement object (33) using the received distance variable.

4. Torsion or torque sensor according to one of the preceding claims,
in which the electrical variable which represents the inductance of the transmitting coil (9) or is clearly linked thereto is the amplitude of the coil voltage.

5. Torsion or torque sensor according to one of the preceding claims, in which the geometry of the ferrite core (23) is selected in such a manner that the limbs (27) form two pairs of limbs in which two limbs (27) in each case are opposite one another on opposite sides of the central limb (25) and the two pairs of limbs have an orientation rotated through 90° with respect to one another.

6. Method for determining torsion or torque using a magneto-elastic force sensor, which comprises a method for compensating distance dependency in the measurement signal of a magneto-elastic force sensor having a ferrite core (23) which has a sensor head (21) with a central limb (25) and four outer limbs (27) surrounding the central limb (25), wherein a transmission coil (9) which generates a magnetic field is arranged on the central limb (25) and magnetic field sensors (11) for measuring a magnetic flux caused by the magnetic field of the transmission coil (9) in a measurement object (13, 33) are arranged on the outer limbs (27),
the measurement signal representing the magnetic flux caused in the measurement object (33), in which:
- an electrical variable of the transmitting coil (9), which represents the inductance of the transmitting coil (9) or is clearly linked thereto, is recorded,
- the distance between the transmitting coil (9) or the sensor head (21) and the measurement object (33) is determined from the recorded electrical variable, and
- the distance dependency in the measurement signal is compensated using the determined distance.

7. Method according to Claim 6,
in which the distance between the transmitting coil (9) or the sensor head (21) and the measurement object (33) is determined from the recorded electrical variable using a predefined relationship between values of the electrical variable of the transmitting coil (9), which represents the inductance of the transmitting coil (9) or is clearly linked thereto, and values for the distance between the transmitting coil (9) or the sensor head (21) and the measurement object (33).

8. Method according to Claim 7,
in which the predefined relationship between values of the electrical variable of the transmitting coil (9), which represents the inductance of the transmitting coil (9) or is clearly linked thereto, and values for the distance between the transmitting coil (9) or the sensor head (21) and the measurement object (33) is determined by means of a calibrating measurement.

## Revendications

1. Capteur de torsion ou de couple comprenant un capteur de force magnétoélastique ayant
- une tête ( 21 ) de capteur, qui a un noyau ( 23 ) de ferrite à branche ( 25 ) médiane et quatre branches ( 27 ) extérieures entourant la branche (25) médiane, dans laquelle sont montés, sur la branche ( 25 ) médiane, une bobine ( 29 ) d'émission produisant un champ magnétique et, sur les branches ( 27 ) extérieures, des capteurs ( 11 ) de champ magnétique pour mesurer un flux magnétique provoqué dans un objet ( 33 ) à mesurer par le champ magnétique de la bobine ( 9 ) d'émission, **caractérisé par**
- un dispositif ( 14 ) de détection pour la détection d'une grandeur électrique reproduisant l'inductance de la bobine ( 9 ) d'émission ou combinée univoquement à celle-ci, le capteur de force magnétoélastique comprenant en outre un dispositif ( 15 ) pour déterminer la distance de la tête ( 21 ) du capteur à l'objet ( 33 ) à mesurer à partir de la grandeur électrique.

2. Capteur de torsion ou de couple suivant la revendication 1, dans lequel le dispositif ( 15 ) de détermination de la distance de la tête ( 21 ) du capteur à l'objet ( 33 ) à mesurer, comprend :
une mémoire ( 16 ) ayant une relation mémorisée, dans laquelle des valeurs de la grandeur électrique, reproduisant l'inductance de la bobine ( 9 ) d'émission ou combinées univoquement à celle-ci, sont mises en relation avec des valeurs de la distance de la bobine ( 9 ) d'émission ou de la tête ( 21 ) de capteur à l'objet ( 33 ) à mesurer et
une unité ( 17 ) d'association, qui est en liaison avec le dispositif ( 14 ) de détection et avec la mémoire ( 16 ), qui associe, à l'aide de la relation mémorisée, à la grandeur électrique détectée, une distance de la bobine ( 9 ) d'émission ou de la tête ( 21 ) de capteur à l'objet ( 33 ) à mesurer et qui produit une grandeur de distance représentant la distance associée.

3. Capteur de torsion ou de couple suivant la revendication 2, qui comprend en outre une unité ( 18 ) de correction reliée au au moins un capteur ( 11 ) de champ magnétique et à l'unité d'association pour la réception de la grandeur de distance, unité ( 18 ) de correction qui corrige, à l'aide de la grandeur de distance reçue, les résultats de mesure du au moins un capteur ( 11 ) de champ magnétique lors de la mesure d'un flux magnétique provoqué par le champ magnétique de la bobine ( 9 ) d'émission dans un objet ( 33 ) à mesurer.

4. Capteur de torsion ou de couple suivant l'une des revendications précédente,
dans lequel la grandeur électrique, reproduisant l'inductance de la bobine ( 9 ) d'émission ou combinée univoquement à celle-ci, est l'amplitude de la tension de la bobine.

5. Capteur de torsion ou de couple suivant l'une des revendications précédentes,
dans lequel la géométrie du noyau ( 23 ) de ferrite est choisie de manière à ce que les branches ( 27 ) forment deux paires de branches dans lesquelles respectivement deux branches ( 27 ) sont opposées l'une à l'autre sur des côtés opposés de la branche ( 25 ) médiane et les deux paires de branches ont une orientation à 90° l'une de l'autre.

6. Procédé de détermination d'une torsion ou d'un couple au moyen d'un capteur de force magnétoélastique, qui est un procédé de compensation d'une dépendance de distance dans le signal de mesure d'un capteur de force magnétoélastique ayant un noyau ( 23 ) de ferrite, qui a une tête ( 21 ) de capteur ayant une branche ( 25 ) médiane et quatre branches ( 27 ) extérieures entourant la branche ( 25 ) médiane, dans lequel sont montés, sur la branche ( 25 ) médiane, une bobine ( 9 ) d'émission produisant un champ magnétique et, sur les branches ( 27 ) extérieures, des capteurs ( 11 ) de champ magnétique pour mesurer un flux magnétique provoqué dans l'objet ( 13, 33 ) à mesurer par le champ magnétique de la bobine ( 9 ) d'émission,
dans lequel le signal de mesure représente le flux magnétique provoqué dans l'objet ( 33 ) à mesurer, dans lequel :
- on détecte une grandeur électrique de la bobine ( 9 ) d'émission reproduisant l'inductance de la bobine ( 9 ) d'émission ou combinée univoquement à celle-ci,
- à partir de la grandeur électrique détectée, on détermine la distance de la bobine ( 9 ) d'émission ou de la tête ( 21 ) de capteur à l'objet ( 33 ) à mesurer et
- on compense la dépendance de distance dans le signal de mesure à l'aide de la distance déterminée.

7. Procédé suivant la revendication 6,
dans lequel on détermine la distance de la bobine ( 9 ) d'émission ou de la tête ( 21 ) de capteur à l'objet ( 33 ) à mesurer à partir de la grandeur électrique détectée à l'aide d'une relation donnée à l'avance entre des valeurs de la grandeur électrique de la bobine ( 9 ) d'émission, reproduisant l'inductance de la bobine ( 9 ) d'émission ou combinée univoquement à celle-ci, et des valeurs de la distance de la bobine ( 9 ) d'émission ou de la tête ( 21 ) de capteur à l'objet ( 33 ) à mesurer.

8. Procédé suivant la revendication 7,
dans lequel on détermine, par une mesure d'étalonnage, la relation donnée à l'avance entre des valeurs de la grandeur électrique de la bobine ( 9 ) d'émission, reproduisant l'inductance de la bobine ( 9 ) d'émission ou combinée univoquement à celle-ci, et des valeurs de la distance de la bobine ( 9 ) d'émission ou de la tête ( 21 ) de capteur à l'objet ( 33 ) à mesurer.
